# EUROPEAN PATENT APPLICATION

(11) **EP 0 942 046 A2**
(43) Date of publication of application: **15.09.1999**
(21) Application number: 99301850.6
(22) Date of filing: 11.03.1999
(51) Int. Cl.: C08L 83/04, C08K 5/54, C08K 5/00

(54) **Diluted curing agent for silicones and mould material containing it**

(30) Priority: 11.03.1998 GB 9805127
(71) Applicant: Replication Technologies Limited, Welwyn Garden City, Hertfordshire AL7 1EN (GB)
(72) Inventor: Patel, Mukesh, c/o Replication Technologies Ltd., Welwyn Garden City, Herts AL7 1EN (GB); Manzo, Arthur, Wheathampstead, Herts AL4 8BG (GB); Tweedie, David, Upwood, Ramsey, Cambs PE17 1PU (GB)
(74) Representative: Evens, Paul Jonathan

(57) **Abstract**

A curing agent for use in making silicone elastomer moulds, comprises: a cross-linking component which, in suse, chemically reacts in the presence of a catalyst with a silicone polymer or monomer precursor thereof to produce the silicone elastomer; or a catalyst which, in use, catalyzes the chemical reaction between the cross-linking component and the silicone polymer or monomer precursor thereof; characterized by diluting with silicone fluid the cross-linking component or catalyst concentration. The addition of silicone fluid improves fluidity of the mixture resulting from adding the curing agent to the base material without significantly affecting the physical properties of the cured material.

## Description

The present invention relates to a composition for use in making a silicone elastomer, and to a method of making the silicone elastomer, particularly but not exclusively for producing moulds and replicating objects.

Silicones have an unusual array of properties, including a high degree of chemical inertness and low surface tension. Silicone elastomers are an extremely important genus of silicone products and are, on the face of it, ideally suited for use in making moulds, either for mass producing articles (e.g., fibrous plaster mouldings for interior decorating) or merely replicating individual articles (e.g., a work of art). Typically the mould material is supplied as a two-part system with one part - the base material - comprising a silicone polymer or monomer precursor thereof (e.g., the material supplied under the tradename 'Silastic' by Dow Corning), and with the other part - the curing agent - comprising a "crosslinker" and a catalyst. The crosslinker is a chemical which in the presence of the catalyst chemically reacts with and binds together polymer chains in the base. (In some two-part systems, the three critical components - polymer, crosslinker and catalyst - may be distributed differently between the base material and the curing agent). For example, the base may comprise two components, either polymer and crosslinker or polymer and catalyst, leaving the curing agent with only one active component, the catalyst or crosslinker respectively.

The two-part system is activated by mixing the two parts together, usually with the base material representing about 95% of the total weight. The mixture is then applied to the surface being moulded, where it cures to produce the silicone elastomer mould. However, problems are sometimes encountered in making silicone elastomer moulds.

The present applicant has appreciated that the conventional 5% of the total weight addition rate for the curing agent of the system is too precise in an industry such as one dealing with fibrous plaster that traditionally measures quantities by eye. Furthermore, the viscosities of existing two-part systems as supplied are too high to allow for the unassisted free release of air trapped in the mixture. Air entrapment gives rise to bubbles on the face of the cured material of the moulds. Such bubbles may lead to imperfect mouldings or castings from the resulting mould, and also reduce mould life. Although the latter problem may be alleviated, or even obviated, with the use of vacuum equipment to draw out the air bubbles, such equipment is costly and not generally seen as a viable proposition.

An object of the present invention is to address the stated shortcomings of existing systems with a view to making improved silicone elastomer moulds.

According to one aspect of the present invention, there is provided a curing agent for use in making a silicone elastomer, comprising: a crosslinking component which, in use, chemically reacts in the presence of a catalyst with a silicone polymer or monomer precursor thereof to produce the silicone elastomer; or a catalyst which, in use, catalyzes the chemical reaction between the crosslinking component and the silicone polymer or monomer precursor thereof; characterised by comprising a silicone fluid to dilute crosslinking component or catalyst concentration.

The present applicant has surprisingly found that the addition of silicone fluid (e.g., polydimethylsiloxane) improves the fluidity of the mixture resulting from adding the curing agent to the base material without significantly affecting the physical properties of the cured material. Being less viscous, trapped air is able to rise more freely from the surface being moulded, giving an improved finish to the face of the resulting mould.

In one embodiment, the curing agent may comprise both the crosslinking component and the catalyst. The silicone fluid may account for at least 25% of the total weight of the curing agent, and in one embodiment about 50% of the total weight of the curing agent. The presence of such levels of silicone fluid have an additional benefit. In order to ensure an optimum blend of crosslinking component and catalyst to base material, the curing agent of the present invention must be added at higher levels than conventional curing agents which are not diluted with silicone fluid. This allows for a greater margin of error in measuring out the required quantity of the curing agent of the system, since a 1 to 2% error in a larger volume of diluted curing agent will be less critical than a similar error in a smaller volume of undiluted, conventional curing agent.

The curing agent may further comprise a pigment that adds colour to, or alters the colour of, the curing agent. The pigment may be an inert, non-cadmium pigment dispersed in a reactive silicone fluid, e.g., vinyl-terminated polydimethylsiloxane. The standard curing agent of existing systems is typically clear and consequently when mixed with the base material gives no indication of the homogeneity of the resulting mixture. However, a homogeneous mixture is essential to obtaining a uniform cure of the silicone elastomeric mould, since inadequate mixing may result in soft spots or even liquid areas in the cured elastomer. By providing the pigment or colour tint, it is possible to gauge the degree of homogeneity simply with the eye; a mixture with coloured streaks running through it will indicate that further mixing is required, whereas a uniform colour will indicate that the two-parts are mixed thoroughly.

According to a second aspect of the present invention, there is provided a method of making a silicone elastomer, comprising; providing a silicone polymer or monomer precursor thereof, a crosslinking component and a catalyst, selected such that the catalyst catalyzes a chemical reaction between the crosslinking component and silicone polymer or monomer precursor thereof when mixed together; and mixing the same together to make the silicone elastomer; characterised by diluting with silicone fluid the crosslinking component or catalyst prior to mixing with the silicone polymer or monomer precursor thereof.

Preferred features of the second aspect of the invention are defined in dependant claims numbered 9 to 13, to which reference should now be made.

The mixture which cures to form the silicone elastomer may be applied to a profiled surface and allowed to cure in situ in order to make a silicone elastomer mould of the surface. Tests carried out by the applicant indicate that mould life is measurably increased, sometimes by as much as 20% when polyester resins are the casting materials. This is surmised as being due to an increased level of non-crosslinked silicone in the cured silicone matrix which helps prevent the invasion of free styrene released during the polyester cure cycle and also assists with the release of the cast from the mould.

Examples embodying the present invention will now be described for the purposes of illustration .

### EXAMPLE 1

| | |
|---|---|
| BASE COMPONENT | : 100 Parts Silastic 3481 Base |
| CURING AGENT | : 50 Parts Silastic 81-T Crosslinking Component & Catalyst |
| | : 48.3 Parts Dow Corning 200/50 cs Silicone fluid Dow Corning 200/50 cs silicone fluid is a dimethyl siloxane polymer. |
| | : 1.7 Parts Silastic LPX Vermillion 5 Colour Tint |

In this example, 100 parts of base component were mixed with 10 parts by weight of curing agent until a blend of uniform pink colour was obtained. The mixture was applied to the surface being moulded and allowed to cure. The resulting silicone elastomer mould was removed and found to be substantially free of defects, e.g., soft spots and bubbles in the face of the mould, and to have properties suitable for producing fibrous plaster mouldings.

The Silastic 81-T in the curing agent gives rise to a slow cure, and Silastic 81-F or 81-V may be used in its place to give more rapid cure times.

### EXAMPLE 2

| | |
|---|---|
| BASE COMPONENT | : 100 Parts Silastic 3483 Base |
| CURING AGENT | : 50 Parts Silastic 83 Crosslinking agent & Catalyst |
| | : 48.3 Parts Dow Corning 200/50 cs Silicone fluid |
| | : 1.7 Parts Silastic Red 5 Colour Tint |

Example 2 is similar to Example 1 except that a soft base component is used with a corresponding crosslinking component and catalyst and a different colour tint is used. The base component and curing agent are mixed in the same proportions as Example 1, and the resulting silicone elastomer mould was likewise found to be substantially free of defects.

## Claims

1. A curing agent for use in making a silicone elastomer, comprising: a crosslinking component which, in use, chemically reacts in the presence of a catalyst with a silicone polymer or monomer precursor thereof to produce the silicone elastomer; or a catalyst which, in use, catalyzes the chemical reaction between the crosslinking component and the silicone polymer or monomer precursor thereof; characterized by comprising a silicone fluid to dilute crosslinking component or catalyst concentration.

2. A curing agent according to claim 1, comprising both the crosslinking component and the catalyst.

3. A curing agent according to claim 2, in which the silicone fluid is present in an amount of at least 25% by weight.

4. A curing agent according to claim 3, in which the silicone fluid is present in an amount of substantially 50% by weight.

5. A curing agent according to any one of claims 1 to 4, further comprising a pigment that alters the colour of the curing agent.

6. A curing agent according to claim 5, in which the pigment is an inert, non-cadmium pigment dispersed in a reactive silicone fluid.

7. A curing agent according to claim 5 or 6, in which the pigment is in an amount less than 0.5% by weight.

8. A curing agent according to any one of the preceding claims, in which the silicone fluid is dimethyl siloxane polymer.

9. A method of making a silicone elastomer, comprising: providing a silicone polymer or monomer precursor thereof, a crosslinking component and a catalyst, selected such that the catalyst catalyzes a chemical reaction between the crosslinking component and silicone polymer or monomer precursor thereof when mixed together; and mixing the same together to make the silicone elastomer when cured; characterized by diluting with silicone fluid the crosslinking component or catalyst prior to mixing with the silicone polymer or monomer precursor thereof.

10. A method according to claim 9, characterized by diluting with silicone fluid both the crosslinking component and catalyst prior to mixing with the silicone polymer or monomer precursor thereof.

11. A method according to claim 9 or 10, further comprising providing a pigment with a hue different to that of the silicone polymer or monomer precursor, adding to the silicone polymer or monomer precursor the pigment with the catalyst and crosslinking component, and mixing until a uniform hue is achieved.

12. A method according to any one of claims 9 to 11, in which the silicone fluid amounts to up to 50% of the total weight of crosslinking component, catalyst and silicone fluid which are used.

13. A method according to any one of claims 9 to 12, in which the silicone polymer or monomer precursor thereof amounts to about 90% of the total weight of the mixture.

14. A method of making a silicone elastomer mould, comprising: preparing a silicone-elastomer-making mixture according to any one of claims 9 to 13; applying the mixture to a surface being moulded; and allowing the mixture to cure in situ on the surface.

15. A system for making a silicone elastomer, comprising a silicone polymer or monomer precursor thereof and a curing agent, in accordance with any one of claims 1 to 8, for initiating a chemical reaction in or with the silicone polymer or monomer precursor to produce the silicone elastomer.
